# EUROPÄISCHE PATENTSCHRIFT

(11) **EP 1 753 963 B1**
(45) Veröffentlichungstag und Bekanntmachung des Hinweises auf die Patenterteilung: **12.11.2008**
(21) Anmeldenummer: 05747877.8
(22) Anmeldetag: 28.04.2005
(51) Int. Cl.: F16B 19/08, H02K 5/04

(54) **ELEKTRISCHE MASCHINE UND VERFAHREN ZUR VERBINDUNG EINER ELEKTRISCHEN MASCHINE MIT EINEM ANSCHLUSSFLANSCH**
ELECTRICAL MOTOR AND METHOD FOR CONNECTION OF AN ELECTRICAL MOTOR TO A CONNECTOR FLANGE
MACHINE ELECTRIQUE ET PROCEDE POUR RELIER UNE MACHINE ELECTRIQUE A UNE BRIDE DE RACCORDEMENT

(30) Priorität: 21.05.2004 DE 102004025486
(43) Veröffentlichungstag der Anmeldung: 21.02.2007
(73) Patentinhaber: ROBERT BOSCH GMBH, 70442 Stuttgart (DE)
(72) Erfinder: FORNOFF, Dieter, 76356 Weingarten (DE); DREWE, Ingo, 77815 Buehl (DE); NEUENFELD, Juergen, 88045 Friedrichshafen (DE); MIEHLE, Frank, 88090 Immenstaad (DE)
(86) Internationale Anmeldenummer: PCT/EP2005/051938
(87) Internationale Veröffentlichungsnummer: WO 2005/113991

(56) Entgegenhaltungen:
- EP-A- 0 097 875
- DE-A1- 10 118 935
- DE-A1- 10 341 752

## Beschreibung

### Technisches Gebiet

Aufgrund einer zunehmenden Miniaturisierung im Automobilbau werden einzelne Komponenten, insbesondere elektrische Maschinen an die baulichen Anforderungen, insbesondere an den zur Verfügung stehenden Bauraum, angepasst. Im wachsenden Maße werden elektrische Maschinen direkt und ohne integriertes Getriebe an einen Anschluss adaptiert, wobei eine gegebenenfalls erforderliche Getriebestufung anschlussseitig erfolgt. Die elektrische Maschinen sind für sich lauffähige Komponenten, welche als Einzeleinheit ihre elektromotorische Funktion erfüllen.

### Stand der Technik

Die Erfindung betrifft eine elektrische Maschine nach dem Oberbegriff von Anspruch 1 sowie ein Verfahren nach dem Oberbegriff von Anspruch 12. Eine derartige Maschine ist aus der EP 0 097 875 A2 bekannt.

Geläufig ist zur Befestigung der elektrischen Maschine an einem Anschluss ein Flansch der elektrischen Maschine mit separat integrierten Befestigungsaugen oder Anschraublaschen versehen. In vielen Anwendungsbereichen steht der dafür erforderliche Bauraum aber nicht zur Verfügung. Auch kann die Lage von Anschraublaschen am Anschluss von der Position der integrierten Befestigungsaugen oder Anschraublaschen abweichen.

DE 103 41 752 A1 bezieht sich auf ein Hohlnietwerkzeug mit einem Nietstempel sowie ein Nietverfahren und eine Nietverbindung. Der beschriebene Nietstempel zum Verformen einer Hohlniet weist einen Nietschaft auf, welcher einen sich entlang seiner Achse erstreckenden Durchdringungsabschnitt aufweist, der derart ausgebildet ist, dass das Innere des mittleren Teils einer Hohlniet abgestützt wird, wenn der Nietstempel die Hohlniet während eines Nietvorgangs durchdringt. Auf diese Weise wird eine Verformung des mittleren Teils der Hohlniet verringert oder im wesentlichen verhindert, so dass zuverlässig eine sichere Nietverbindung geschaffen wird. Mit dem offenbarten Nietverfahren kann eine Nietverbindung zwischen Gehäuseteilen einer elektrischen Maschine, so zum Beispiel eines elektrischen Kleinmotors geschaffen werden, oder es kann ein aus Aluminium oder aus Kunststoff gefertigtes Getriebegehäuse mit einem aus Eisen oder aus Stahl hergestellten Poltopf, der die Ankerwelle des Antriebs der elektrischen Maschine umgibt, verbunden werden. In den Poltopf können Permanentmagneten, die zum Beispiel aus einem ferromagnetischen oder einem Seltenerdmagnet bestehen, eingelassen sein.

### Darstellung der Erfindung

Mit der erfindungsgemäß vorgeschlagenen elektrischen Maschine wird ein spezielles Montagekonzept verwirklicht: Die elektrische Maschine kann direkt durch eine oder mehrere Hohlnieten, mit denen das Gehäuse mit dem Lagerschild zusammengebaut ist, hindurch mit einem Befestigungselement, insbesondere mit einem lösbar verbindbaren Befestigungselement, wie beispielsweise einer Schraube, an einem Anschluss aufgenommen, montiert, fixiert, befestigt oder auch zentriert werden. Die Anbindung zwischen elektrischer Maschine und Anschluss ist damit auf vorteilhafte Art bauraumoptimierend und bauraumsparend gestaltet; zusätzliche Anschraublaschen an einem Flansch der elektrischen Maschine sind nicht notwendig. Durch die Verwendung gleicher Befestigungsaugen am Gehäuseflansch und am Lagerschildflansch, zum einen zur Verbindung des Gehäuses mit dem Lagerschild und zum anderen zu Verbindung der elektrischen Maschine mit einem Anschlussflansch, kann der im Flanschbereich erforderliche Bauraum vorteilhaft reduziert werden. Auf diese Weise werden vorteilhaft die Einsatzmöglichkeiten und Anwendungen einer elektrischen Maschine erweitert.

Die erfindungsgemäße elektrische Maschine ist für sich eine einzelne lauffähige Komponente, welche im Automobilbau anwendungsbezogen montiert werden kann. Nach der erfolgten Aufnahme oder Montage am Anschlussflansch erfüllt die elektrische Maschine uneing e-schränkt die technischen Anforderungen bezüglich Dichtheit und Schüttelbeständigkeit. Die durch die eine oder die mehreren Hohlnieten aufgebrachte Klemmkraft zwischen Gehäuseflansch und Lagerschildflansch wird durch den Anschluss mittels des eine der Hohlnieten durchdringenden Befestigungselements erhöht, da ein massives Befestigungselement, wie beispielsweise eine Schraube, eine viel höhere Eigensteifigkeit als die Hohlniet besitzt. Die Hohlniet kann dann bis in den plastischen Bereich deformiert werden, ohne die Klemmverbindung durch die Kraft des Befestigungselements, insbesondere der Schraube, nennenswert - die Kraft für die Stauchung der Hohlniet wirkt entgegen der Kraft des Befestigungselements - zu beeinträchtigen. Die Verbindung durch das Befestigungselements unterstützt oder erhöht die Dichtheit und die Steifigkeit, so dass diese technischen Anforderungen nicht schon alleinig durch die Hohlnietverbindung erfüllt sein müssen.

Bei der erfindungsgemäß vorgeschlagenen elektrischen Maschine kann es sich um eine solche handeln, die als Kleinmotor ausgebildet, in den verschiedensten Anwendungen zum Einsatz kommen kann, daneben kann das erfindungsgemäß vorgeschlagene Montagekonzept auch an großen oder sehr großen elektrischen Maschinen, die beispielsweise im Kraftwerksbereich eingesetzt werden, Verwendung finden.

### Zeichnung

Weitere Vorteile und vorteilhafte Ausführungsformen und Weiterbildungen der Erfindung werden anhand der nachfolgenden Figuren sowie deren Beschreibungen dargestellt. Es zeigt im Einzelnen:
- Figur 1: eine Seitenansicht einer Ausführungsform der erfindungsgemäßen elektrischen Maschine,
- Figur 2: ein Detail des Lagerschildes der in Figur 1 gezeigten Seitenansicht, und
- Figur 3: eine Ansicht der erfindungsgemäßen elektrischen Maschine in Anschlussrichtung und
- Figuren 4 bis 6: Schnittdarstellungen durch Ausführungsvarianten (in axialer Richtung) durch Hohlniet, Flansch und Poltopf der elektrischen Maschine und
- Figuren 6.1 und 6.2: Details der Ausführungsvariante gemäß Figur 6.

### Ausführungsvarianten

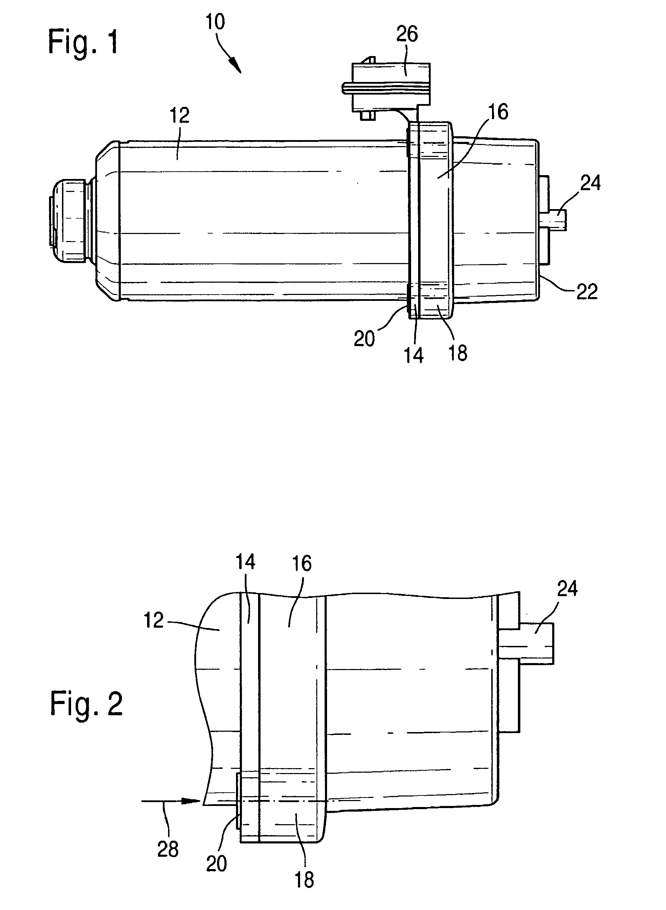

Die Figur 1 zeigt eine Seitenansicht einer Ausführungsform der erfindungsgemäßen elektrischen Maschine und dient der Erläuterung des grundsätzlichen Aufbaus, insbesondere der sichtbaren Komponenten, der elektrischen Maschine. Die elektrische Maschine kann ein Generator, ein Motor mit Bürsten (eine so genannte DC-Einheit), ein bürstenloser Motor (eine so genannte EC-Einheit), oder eine Asynchronmaschine, eine Reluktanzmaschine, eine Synchronmaschine oder eine Hysteresemaschine sein, insbesondere kann die elektrische Maschine getriebelos ausgeführt sein. In der Figur 1 ist ohne Beschränkung der Allgemeinheit bezüglich der Funktionalität eine DC-Einheit dargestellt.

In der Außenansicht sichtbar weist die elektrische Maschine 10 ein Gehäuse 12 (Poltopf) mit einem Gehäuseflansch 14 und einen Lagerschild 16 mit einem Lagerschildflansch 18 auf. Der Gehäuseflansch 14 und der Lagerschildflansch 18 sind einander gegenüberliegend und in Formschluss angeordnet, so dass das becherähnliche Gehäuse 12 und der topfähnliche Lagerschild 16 die elektrische Maschine 10 in Zusammenwirkung kapseln. Der Gehäuseflansch 14 und der Lagerschildflansch 18 weisen zueinander korreliert positionierte Durchbohrungen oder die jeweiligen Flansche 14,18 durchmessende zueinander korreliert liegende Löcher auf. Die Löcher oder Durchbohrungen können zylinderförmig oder polygonförmig sein. Die Verbindung ist mittels Hohlnieten 20, deren Formgebung zur Form der Durchbohrungen angepasst ist, fixiert. Auf die Hohlnieten 20 wird näher anhand der Figur 2 eingegangen. Der Lagerschild 16 weist einen Boden auf, welcher eine Anschlussseite 22 bildet. An der Anschlussseite 22 steht ein Ende einer in der elektrischen Maschine 10 drehbar gelagerten Welle 24 aus dem Lagerschild 16 heraus. Das Gehäuse 12 und/oder der Lagerschild 18 können in ihrem Inneren eine Lagerstelle für die Welle 24 aufweisen. Auf der Anschlussseite 22 ist bei Aufnahme der elektrischen Maschine 10 an einem Anschlussflansch eine Wirkverbindung der Welle 24 mit einer anwendungsbezogenen Getriebestufung, hier nicht näher spezifiziert, herstellbar. Am Lagerschild 16 ist auch ein Stecker 26 mit Bürstenträger aufgenommen, so dass ein einfacher und benutzerfreundlicher Anschluss der elektrischen Maschine 10 an eine hier nicht gezeigte Stromquelle erfolgen kann. Das Gehäuse 12 nimmt Permanentmagnete (nicht sichtbar) der DC-Einheit auf. Im Fall einer EC-Einheit nimmt das Gehäuse 12 den Stator auf.

Die Figur 2 ist ein Detail des Lagerschildes 16 der in Figur 1 gezeigten Seitenansicht. In diesem Ausschnitt des Lagerschildes 16 mit der Welle 24 ist gezeigt, dass der Lagerschildflansch 18 mit dem Gehäuseflansch 14 des Gehäuses 12 mit einer Hohlniet 20 in einer die Flansche 14,18 durchmessenden Bohrung verbunden ist, so dass die Hohlniet 20 im wesentlichen parallel zu der durch die Lage der Welle 24 definierten Achse orientiert ist. In einer beispielhaften Ausführungsform kann beispielsweise der Innendurchmesser der Hohlniet 20 mehr als 4,7 mm betragen. Generell ist der Innendurchmesser der Hohlniet 20 größer oder gleich des Durchmessers einer verwendeten Schraube zu wählen. Käme zum Beispiel eine Schraube M4 zum Einsatz, so liegt der Innendurchmesser der Hohlniet ≥ 4,0 mm. Dies ist abhängig vom gewählten Einsatzzweck der elektrischen Maschine 10. Die Hohlniet 20 kann bevorzugt derart zur Verbindung des Gehäuseflansches 14 mit dem Lagerschildflansch 18 ausgeführt sein, dass die Hohlniet 20 in ihrem mittleren Teil, d. h. in dem innerhalb der Durchbohrungen oder Löchern liegenden Abschnitt, im wesentlichen stauchungsfrei oder unverformt ist, insbesondere hohlzylinderförmig oder polygonförmig, der Formgebung der Durchbohrung gemäß. Eine derartige Nietverbindung kann in einem Nietverfahren erzeugt beziehungsweise mit einem Hohlnietwerkzeug hergestellt werden, wie sie im vorangemeldeten Dokument DE 103 41 752A1, auf das hier explizit verwiesen wird, offenbart sind.

Der Gehäuseflansch 14 und der Lagerschildflansch 18 werden bei der Aggregatfertigung mittels der Hohlnieten 20 verbunden, indem die Enden von Hohlnietenvorläufern aufgeweitet oder überrollt und über die Lochränder gestülpt werden, so dass Köpfe der Hohlnieten 20 erzeugt werden. Eine Aufnahme an einem Anschluss kann dann mittels einer Schraubverbindung erreicht werden: Eine Schraube wird in Schraubrichtung 28 durch die verbleibende Öffnung der Hohlniet 20 hindurch dem anschlussseitigen Anschlussflansch (hier nicht gezeigt) zugeführt, wobei Aufnahmeelemente des Anschlussflansches, beispielsweise hier mit Innengewinden versehene Schraublöcher, ebenfalls korreliert zu den Durchbohrungen oder Löchern des Gehäuseflansches 14 und des Lagerschildflansches 18 positioniert sind. Das heißt die Öffnungen der Hohlnieten 20 bilden Befestigungsaugen für den anwendungsbezogenen Anschluss. Auf diese Weise wird eine Befestigung der elektrischen Maschine 10 am Anschlussflansch auf einfache und bauraumsparende Weise erreicht. Bei der Herstellung der erfindungsgemäß vorgeschlagenen elektrischen Maschine wird das Gehäuse 12 (Poltopf) mit dem Lagerschild (16, 18) fest über die Hohlniet 20 verbunden. Beim kundenseitigen Einbau wird nun das zuvor komplettierte Aggregat über Befestigungselemente, wie zum Beispiel Schrauben durch die Hohlnieten 20 hindurch befestigt Die Klemmkraft, die durch die Hohlniet 20 zwischen Gehäuseflansch 14 und Lagerschildflansch 18 aufgebracht wird, wird nach der Kundenadaption durch das beispielsweise als Schraube ausgebildete Befestigungselement erhöht, da die Schraube eine viel höhere Eigensteifigkeit besitzt als die Hohlniet 20. Durch die hohen, auf die Schraube wirkenden Kräfte wird die Hohlniet 20 entlastet. Sie kann dann bis in den plastischen Bereich deformiert werden, ohne dass die Klemmverbindung, die durch das Befestigungselement, wie zum Beispiel eine Schraube aufgebracht wird, nennenswert beeinträchtigt würde. Die Dichtheit und die erforderliche Steifigkeit wird durch die Endmontage je nach Einsatzzweck durch das Befestigungselement aufgebracht.

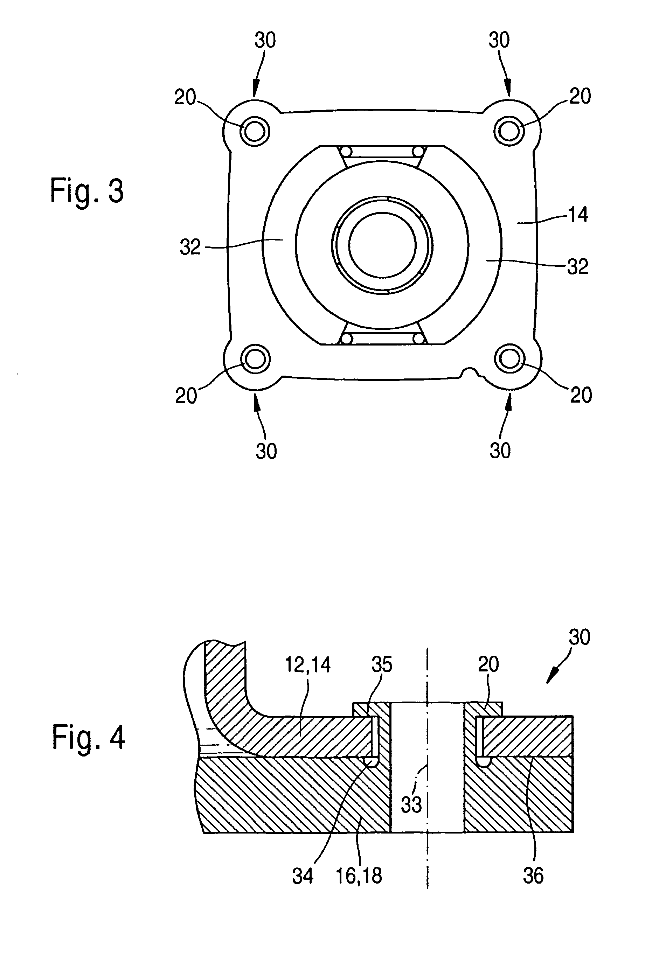

Die Figur 3 zeigt eine Ansicht der erfindungsgemäßen elektrischen Maschine 10 in Anschlussrichtung. Der mit im wesentlichen quadratischem Querschnitt versehene Gehäuseflansch 14 weist in dieser Ausführungsform vier in seinen Ecken liegende Befestigungsaugen 30 auf, welche von den in den Durchbohrungen oder Löchern liegenden Hohlnieten 20 dargestellt sind. Der Gehäuseflansch 14 verdeckt in dieser Ansicht den fluchtend dahinter liegenden Lagerschildflansch 18 mit korrelierter Geometrie, insbesondere korrelierten Bohrungen oder Löcher, welche mittels der Hohlnieten 20 mit dem Gehäuseflansch 14 verbunden sind. Im Inneren des Gehäuses 12 sind zwei Einzelmagnete 32 gezeigt, welche am Gehäuse 12 aufgenommen sind und den Permanentmagnet der DC-Einheit bilden. Alternativ zu einer Realisation in Einzelmagneten 32 kann der Permanentmagnet auch als ein zylinderförmiger Multipolmagnet ausgeführt sein. Im allgemeinen sei betont, dass eine Befestigung des Gehäuses 12 mit dem Lagerschild 16 mit einer Mehrzahl von Hohlnieten 20 erfolgen kann.

Figur 4 ist eine Ausführungsvariante eines an einem Lagerschildflansch 16, 18 ausgeführten Hohlniet zu entnehmen.

Aus der Darstellung gemäß Figur 4 geht hervor, dass der Hohlniet 20 an den Lagerschildflansch 18 angegossen sein kann. Der Hohlniet 20 wird bei der Endmontage im Bereich des Befestigungsauges 30 durch ein zum Beispiel als Schraube ausbildbares Befestigungselement durchsetzt, mit welchem die Endapplikation kundenseitig hergestellt wird. Die elektrische Maschine 10 wird im vormontierten Zustand durch die Hohlniet 20 zwischen dem Gehäuse 12 (Poltopf) am Gehäuseflansch 14, dem der Lagerschildflansch 18 des Lagerschilds 16 gegenüberliegt, zusammengehalten. Die Anlagefläche, mit der der Hohlniet 20 das Gehäuse 12 bzw. den Gehäuseflansch 14 übergreift, ist durch Bezugszeichen 35 identifiziert, die Achse des Hohlniets durch Bezugszeichen 33. Zwischen den einander zuweisenden Seiten des Gehäuses 12 bzw. des Gehäuseflansches 14 sowie des Lagerschildflansches 18 des Lagerschildes 16 stellt sich eine Anlagefläche 36 ein. Durch einen Freistich 34 im Material des Lagerschildflansches 18 des Lagerschildes 16 ist sichergestellt, dass sich eine dichtende Anlage der einander zuweisenden Flansche 14 und 18 ergibt, wenn in die Hohlniet 20 ein Befestigungselement, wie zum Beispiel eine Schraube eingesteckt wird und diese angezogen wird.

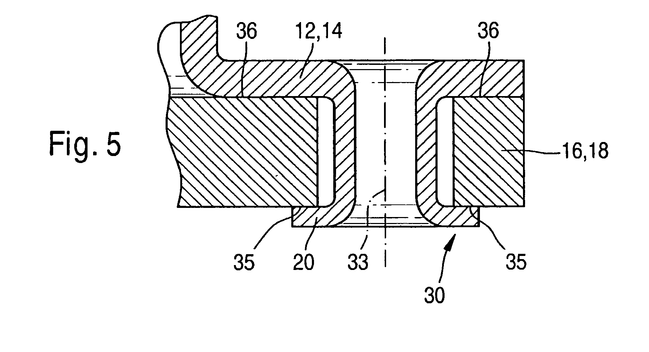

Der Darstellung gemäß Figur 5 ist eine weitere Ausführungsvariante eines Hohlniets zu entnehmen. Gemäß dieser Ausführungsvariante ist das Gehäuse 12 (Poltopf) im Bereich des Gehäuseflansches 14 hohlnietförmig gezogen. Im Bereich des Befestigungsauges 30 durchsetzt der Hohlniet 20 den Lagerschildflansch 18 des Lagerschildes 16 und bildet mit diesem eine Anlagefläche 35. Die Anlagefläche zwischen dem Gehäuse 12 (Poltopf) bzw. von dessen Gehäuseflansch 14 an dem Lagerschildflansch 18 des Lagerschildes 16 ist durch Bezugszeichen 36 kenntlich gemacht. Die Achse des Hohlniets 20 ist analog zur Darstellung gemäß Figur 4 durch Bezugszeichen 33 identifiziert.

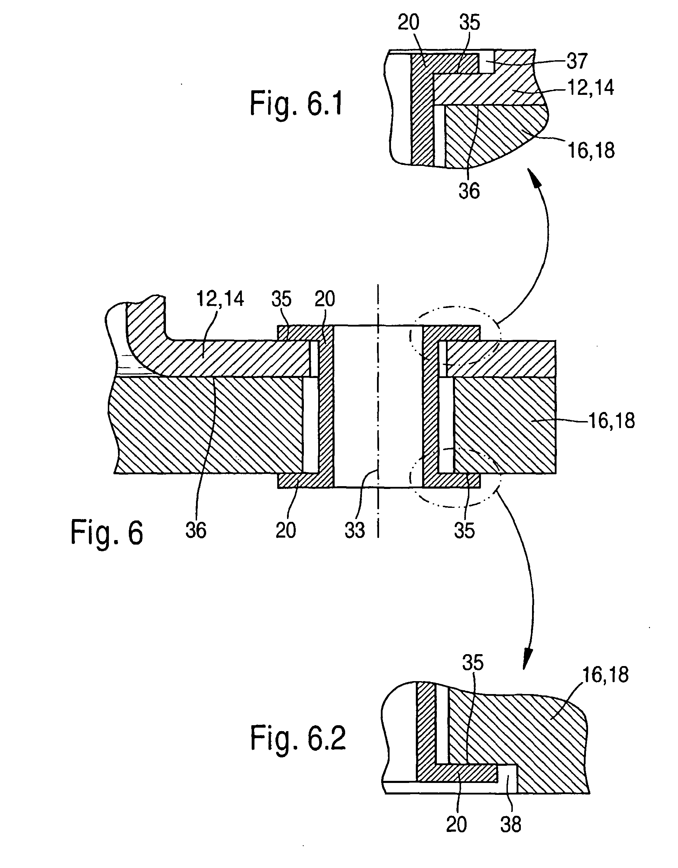

Aus der Darstellung gemäß Figur 6 geht eine weitere Ausführungsvariante des Hohlniets hervor. Der Darstellung gemäß Figur 6 ist entnehmbar, dass der Hohlniet 20 buchsenförmig ausbildbar ist und im Bereich seiner Stirnfläche im montierten Zustand sowohl den Gehäuseflansch 14 des Gehäuses 12 (Poltopf) als auch der Lagerschildflansch 18 des Lagerschildes 16 übergreift. Die sich bei Vernietung des Hohlniets 20 einstellende Anlagefläche 36 zwischen den einander zuweisenden Seiten des Gehäuseflansches 14 und des Lagerschildflansches 18 ist durch Bezugzeichen 36 kenntlich gemacht.

In Figuren 6.1 bzw. 6.2 sind Details der Ausführungsvariante gemäß Figur 6 zu entnehmen.

Gemäß Figur 6.1 weist der Gehäuseflansch 14 des Gehäuses 12 (Poltopf) eine gehäuseflanschseitige Ausnehmung 37 auf, in welche der Überstand des Hohlnietes 20, eine Anlagefläche 35 bildend eingreift, so dass sich eine glatte Außenseite in Bezug auf den Gehäuseflansch 14 des Gehäuses 12 (Poltopf) einstellt. Die Anlagefläche zwischen dem Gehäuseflansch 14 des Gehäuses 12 (Poltopf) und dem Lagerschildflansch 18 des Lagerschildes 16 ist durch Bezugszeichen 36 dargestellt.

Figur 6.2 ist eine weitere Ausführungsvariante eines Hohlnietes zu entnehmen, bei welcher der Hohlniet 20 mit seinem Überstand in eine lagerschildflanschseitige Ausnehmung 38 eingreift. Dadurch wird der Überstand des Hohlniets in Bezug auf den Lagerschildflansch 18 des Lagerschildes 16 versenkt, so dass sich eine glatte Außenseite in Bezug auf den Lagerschildflansch 18 am Lagerschild 16 einstellt.

Den in den Figuren 4 bis 6.2 dargestellten Ausführungsvarianten des Hohlniets 20 ist gemeinsam, dass dieser nach Vormontage von Gehäuse 12 (Poltopf) und Lagerschild 16 von einem zum Beispiel als Schraube ausgebildeten Befestigungselement durchsetzt wird, welches die notwendige Steifigkeit und Dichtheit der Verbindung des Gehäuses 12 mit dem Lagerschild 16 erzeugt.

### Bezugszeichenliste

- 10: elektrische Maschine
- 12: Gehäuse (Poltopf)
- 14: Gehäuseflansch
- 16: Lagerschild
- 18: Lagerschildflansch
- 20: Hohlniet
- 22: Anschlussseite
- 24: Welle
- 26: Stecker mit Bürstenträger
- 30: Befestigungsauge
- 32: Einzelmagnete
- 33: Hohlnietachse
- 34: Freistich
- 35: Anlagefläche Hohlniet
- 36: Anlagefläche Gehäuseflansch, Lagerschildflansch
- 37: gehäuseflanschseitige Ausnehmung
- 38: lagerschildflanschseitige Ausnehmung

## Patentansprüche

1. Elektrische Maschine (10), die eine Welle (24), ein Gehäuse (12) mit einem Gehäuseflansch (14) und einen Lagerschild (16) mit einem Lagerschildflansch (18) aufweist, wobei ein Ende der Welle (24) aus dem Lagerschild (16) hervorsteht,
**dadurch gekennzeichnet, dass** der Gehäuseflansch (14) und der Lagerschildflansch (18) mittels wenigstens einer Hohlniet (20) derart verbunden sind, dass die elektrische Maschine (10) mit einem Befestigungselement durch die Hohlniet (20) hindurch an einem Anschlussflansch einer Getriebeabstufung zur Wirkverbindung mit dem hervorstehenden Ende der Welle (24) aufnehmbar ist.

2. Elektrische Maschine (10) gemäß Anspruch 1,
**dadurch gekennzeichnet,**
**dass** die wenigstens eine Hohlniet (20) derart zur Verbindung des Gehäuseflansches (14) und des Lagerschildflansches (18) verformt ist, dass die Hohlniet (20) in einem mittleren Teil im Wesentlichen stauchungsfrei ist.

3. Elektrische Maschine (10) gemäß Anspruch 1,
**dadurch gekennzeichnet,**
**dass** die wenigstens eine Hohlniet (20) im Wesentlichen parallel zur Welle (24) orientiert ist

4. Elektrische Maschine (10) gemäß Anspruch 1,
**dadurch gekennzeichnet,**
**dass** das Gehäuse (12) und/oder der Lagerschild (16) wenigstens eine Lagestelle der elektrischen Maschine (10) aufweisen.

5. Elektrische Maschine (10) gemäß Anspruch 1,
**dadurch gekennzeichnet**,
ein Stator am Gehäuse (12) aufgenommen ist.

6. Elektrische Maschine (10) gemäß Anspruch 1,
**dadurch gekennzeichnet,**
**dass** wenigstens ein Permanentmagnet am Gehäuse (12) aufgenommen ist.

7. Elektrische Maschine (10) gemäß Anspruch 6,
**dadurch gekennzeichnet,**
**dass** der wenigstens eine Permanentmagnet entweder als zylinderförmiger Multipolmagnet oder durch eine Anzahl von Einzelmagneten (32) ausgebildet ist.

8. Elektrische Maschine (10) gemäß Anspruch 1,
**dadurch gekennzeichnet,**
**dass** die elektrische Maschine (10) getriebelos ist.

9. Elektrische Maschine (10) gemäß Anspruch 1,
**dadurch gekennzeichnet,**
**dass** die elektrische Maschine (10) entweder ein Motor mit Bürsten oder bürstenloser Motor oder ein Generator ist.

10. Elektrische Maschine (10) gemäß Anspruch 1,
**dadurch gekennzeichnet,**
**dass** der Lagerschild (16) einen Stecker (26) mit Bürstenträger aufweist.

11. Elektrische Maschine (10) gemäß Anspruch 1,
**dadurch gekennzeichnet,**
**dass** der Gehäuseflansch (14) und der Lagerschild (18) mittels einer Mehrzahl von Hohlnieten (20) in derselben Weise verbunden sind.

12. Verfahren zur Verbindung einer elektrischen Maschine (10) mit einem Anschlussflansch, wobei die elektrische Maschine (10) ein Gehäuse (12) mit einem Gehäuseflansch (14), einen Lagerschild (16) mit einem Lagerschildflansch (18) und eine Welle (24) mit einem aus dem Lagerschild (16) hervorstehenden Ende aufweist und der Gehäuseflansch (14) und der Lagerschildflansch (18) mittels wenigstens einer Hohlniet (20) verbunden sind,
**dadurch gekennzeichnet,**
**dass** die elektrische Maschine (10) mittels wenigstens eines Befestigungselements durch die wenigstens eine Hohlniet (20) hindurch mit einem Anschlussflansch einer Getriebeabstufung zur Wirkverbindung mit dem hervorstehenden Ende der Welle (24) verbunden wird.

## Claims

1. Electrical machine (10) which has a shaft (24), a housing (12) with a housing flange (14), and an end plate (16) with an end plate flange (18), with one end of the shaft (24) projecting out of the end plate (16), **characterized in that** the housing flange (14) and the end plate flange (18) are connected by means of at least one hollow rivet (20) in such a way that the electrical machine (10) can be held on a connection flange of a gear stepping for operative connection to the projecting end of the shaft (24), through the hollow rivet (20), by way of a fastening element.

2. Electrical machine (10) according to Claim 1,
**characterized**
**in that** the at least one hollow rivet (20) is deformed, for connection of the housing flange (14) and of the end plate flange (18), in such a way that the hollow rivet (20) is substantially free of compression in a central part.

3. Electrical machine (10) according to Claim 1,
**characterized**
**in that** the at least one hollow rivet (20) is oriented substantially parallel to the shaft (24).

4. Electrical machine (10) according to Claim 1,
**characterized**
**in that** the housing (12) and/or the end plate (16) have at least one bearing point for the electrical machine (10).

5. Electrical machine (10) according to Claim 1,
**characterized**
**in that** a stator is held on the housing (12).

6. Electrical machine (10) according to Claim 1,
**characterized**
**in that** at least one permanent magnet is held on the housing (12).

7. Electrical machine (10) according to Claim 6,
**characterized**
**in that** the at least one permanent magnet is either formed as a cylindrical multipole magnet or by a number of individual magnets (32).

8. Electrical machine (10) according to Claim 1,
**characterized**
**in that** the electrical machine (10) does not have a gear mechanism.

9. Electrical machine (10) according to Claim 1,
**characterized**
**in that** the electrical machine (10) is either a motor with brushes or a brushless motor or a generator.

10. Electrical machine (10) according to Claim 1,
**characterized**
**in that** the end plate (16) has a plug (26) with a brush support.

11. Electrical machine (10) according to Claim 1,
**characterized**
**in that** the housing flange (14) and the end plate flange (18) are connected in the same way by means of a plurality of hollow rivets (20).

12. Method for connecting an electrical machine (10) to a connection flange, with the electrical machine (10) having a housing (12) with a housing flange (14), an end plate (16) with an end plate flange (18), and a shaft (24) with an end which projects out of the end plate (16), and the housing flange (14) and the end plate flange (18) being connected by means of at least one hollow rivet (20),
**characterized**
**in that** the electrical machine (10) is connected to a connection flange of a gear stepping for operative connection to the projecting end of the shaft (24), through the at least one hollow rivet (20), by means of at least one fastening element.

## Revendications

1. Machine électrique (10) comportant un arbre (24), un boîtier (12) avec une bride de boîtier (14) et un panneau de palier (16) muni d'une bride de panneau de palier (18), dans laquelle une extrémité de l'arbre (24) sort du panneau de palier (16),
**caractérisée en ce que**
la bride de boîtier (14) et la bride de panneau de palier (18) sont reliées par l'intermédiaire d'un rivet creux (20) de façon que la machine électrique (10) puisse être fixée avec un élément de fixation dans le rivet creux (20) à la bride de raccordement d'un étage de transmission pour coopérer avec l'extrémité en saillie de l'arbre (24).

2. Machine électrique (10) selon la revendication 1,
**caractérisée en ce qu'**
au moins le rivet creux (20) est déformé pour être relié à la bride de boîtier (14) et à la bride de panneau de palier (18) pour que la partie médiane du rivet creux (20) ne présente pratiquement pas de refoulement de matière.

3. Machine électrique (10) selon la revendication 1,
**caractérisée en ce qu'**
au moins le rivet creux (20) est orienté pratiquement parallèlement à l'arbre (24).

4. Machine électrique (10) selon la revendication 1,
**caractérisée en ce que**
le boîtier (12) et/ou le panneau de palier (16) comportent au moins un point de palier de la machine électrique (10).

5. Machine électrique (10) selon la revendication 1,
**caractérisée en ce que**
le stator est reçu par le boîtier (12).

6. Machine électrique (10) selon la revendication 1,
**caractérisée en ce que**
le boîtier (12) est muni d'au moins un aimant permanent.

7. Machine électrique (10) selon la revendication 6,
**caractérisée en ce qu'**
au moins un aimant permanent est réalisé sous la forme d'un aimant multipolaire cylindrique, ou par un ensemble d'aimants séparés (32).

8. Machine électrique (10) selon la revendication 1,
**caractérisée en ce que**
la machine électrique (10) ne comporte pas de transmission.

9. Machine électrique (10) selon la revendication 1,
**caractérisée en ce que**
la machine électrique (10) est un moteur avec des balais, un moteur sans balai, ou un générateur.

10. Machine électrique (10) selon la revendication 1,
**caractérisée en ce que**
le panneau de palier (16) comporte un connecteur (26) muni d'un support de balai.

11. Machine électrique (10) selon la revendication 1,
**caractérisée en ce que**
la bride de boîtier (14) et le panneau de palier (18) sont reliés de la même manière par un ensemble de rivets creux (20).

12. Procédé de liaison d'une machine électrique (10) à une bride de raccordement,
la machine électrique (10) ayant un boîtier (12) avec une bride de boîtier (14), un panneau de palier (16) avec une bride de panneau de palier (18) et un arbre (24) dont une extrémité est en saillie par rapport au panneau de palier (16), la bride de boîtier (14) et la bride de panneau de palier (18) étant reliées par au moins un rivet creux (20),
**caractérisé en ce que**
la machine électrique (10) est reliée par au moins un élément de fixation, par au moins un rivet creux (20), à la bride de raccordement d'un étage de transmission pour coopérer avec l'extrémité en saillie de l'arbre (24).
